# EUROPÄISCHE PATENTSCHRIFT

(11) **EP 2 855 267 B1**
(45) Veröffentlichungstag und Bekanntmachung des Hinweises auf die Patenterteilung: **24.10.2018**
(21) Anmeldenummer: 13725078.3
(22) Anmeldetag: 24.05.2013
(51) Int. Cl.: B64D 11/06, B64C 1/20

(54) **BODENANBINDUNGSBAUGRUPPE EINES FLUGZEUGSITZES**
FLOOR CONNECTION ASSEMBLY OF AN AIRCRAFT SEAT
ENSEMBLE DE FIXATION AU PLANCHER D'UN SIÈGE D'AVION

(30) Priorität: 24.05.2012 DE 102012208718
(43) Veröffentlichungstag der Anmeldung: 08.04.2015
(73) Patentinhaber: Lufthansa Technik AG, 22335 Hamburg (DE)
(72) Erfinder: THOMASCHEWSKI, Oliver, 22846 Norderstedt (DE)
(74) Vertreter: Müller Verweyen
(86) Internationale Anmeldenummer: PCT/EP2013/001528
(87) Internationale Veröffentlichungsnummer: WO 2013/174518

(56) Entgegenhaltungen:
- WO-A1-2013/144156
- FR-A1- 2 920 011
- US-A1- 2007 080 258
- US-A1- 2010 314 494
- US-A1- 2011 233 337

## Beschreibung

Die Erfindung betrifft eine Bodenanbindungsbaugruppe zur mechanischen Anbindung eines Flugzeugsitzes an eine Bodenstruktur eines Flugzeuges, welche mindestens drei Befestigungspunkte aufweist, wobei die Bodenanbindungsbaugruppe an mindestens drei Befestigungspunkten mit jeweils einem Befestigungselement an der Bodenstruktur befestigbar ist.

Flugzeugsitze für Passagierkabinen werden typischerweise an der Bodenstruktur des Flugzeugs befestigt. Die Befestigung an der Bodenstruktur kann hierbei an Sitzschienen oder an einzelnen Befestigungsstellen erfolgen. Der Sitzunterbau ist typischerweise ein metallisches Gestell mit einer Fachwerkstruktur.

Für eine sichere Verwendung eines Flugzeugsitzes im Luftverkehrsbetrieb werden durch die entsprechenden Behörden verschiedene luftfahrtrechtliche Anforderungen formuliert, die die Sicherheit des Passagiers auf dem Flugzeugsitz in verschiedenen Situationen bzw. möglichen Unfallszenarien sicherstellen sollen.

Für einen Crashfall besteht die Anforderung, dass die dynamische Insassenbelastung eines auf dem Flugzeugsitz sitzenden Passagiers unter definierten Bedingungen bestimmte Grenzwerte nicht überschreitet. Hierfür ist es notwendig, dass der Flugzeugsitz eine Möglichkeit bietet, die auf den Passagier einwirkenden Kräfte durch eine Aufnahme kinetischer Energie zu begrenzen. Der Sitzunterbau der üblichen Flugzeugsitze weist daher eine metallische Struktur auf, die sich im Crashfall plastisch verformt, dementsprechend kinetische Energie absorbiert und so die auf den Passagier einwirkenden Kräfte begrenzt.

Die plastische Verformung erfolgt dabei über den ganzen Sitzunterbau verteilt. Das bedeutet, dass die mechanischen Strukturen, die die Last tragen, verformt werden und so die auf den Passagier einwirkenden Kräfte begrenzen. Die Verformung führt auch zu einer geänderten Geometrie und Kraftführung, was bei der Auslegung des Flugzeugsitzes durch entsprechende Festigkeitsreserven berücksichtigt werden muss. Dies wirkt sich nachteilig auf das Gewicht des Flugzeugsitzes aus.

Die Deformation führt im translatorischen Crashfall unter anderem zu einer Rotationsbewegung eines Großteils des Sitzes um einen virtuellen Drehpunkt in der Nähe des Kabinenbodens. Dies führt im oberen Bereich des Sitzes aufgrund der Lage des sich ergebenden virtuellen Drehpunkts zu einer deutlichen translatorischen Verschiebung im oberen Bereich des Sitzes, die zusätzlich zur translatorischen Verschiebung, die zur Energieaufnahme benötigt wird, auftritt. Dies führt somit zu einer großen Bewegungsenveloppe in einem Crashfall für den Flugzeugsitz und folglich auch für den Sitzenden, die als Bewegungsraum von weiteren Einbauten freigehalten werden muss.

Eine Verwendung einer einfachen Versteifung der Struktur für den Sitzunterbau, um eine Rotation bei translatorischen Crashfällen zu reduzieren, steht der sicherheitstechnischen Anforderung zur Kraftbegrenzung für den Passagier entgegen.

Insbesondere gehört zu den behördlichen Anforderungen für Flugzeugsitze, dass in einem Crashfall eine Vordeformation des Flugzeugbodens anzunehmen ist, die vom Sitzunterbau aufgenommen bzw. ertragen werden muss. Die Sitzunterbauten müssen daher eine mechanische Nachgiebigkeit gerade im unteren Bereich aufweisen, um den Auslenkungen in der Flugzeugbodenstruktur folgen zu können. Dies steht im Widerspruch zu einer geringen Rotationsbewegung des Flugzeugsitzes und zur gewünschten kleinen Bewegungsenveloppe. Sitzunterbauten mit steifen Strukturen, die aber nur eine geringe Verformung zulassen, sind daher mit der im Stand der Technik bekannten Lösung nicht realisierbar.

Weiterhin erfolgt durch die Vordeformation der Bodenstruktur eine Verformung des Sitzunterbaus mit großen Dehnungen und einer veränderten Geometrie, was zu einer Schwächung des Sitzunterbaus führt, wobei der eigentliche Crashfall mit hohen dynamischen Lasten erst anschließend auftritt.

Die US 2007/0080258 A1 offenbart ein modulares Sitzsystem, wobei eine Adapterplatte vorgesehen sein kann, mit der ein Installationsmodul, das üblicherweise zur Befestigung des eigentlichen Sitzes an der Sitzschiene dient, mit den flugzeugfesten Sitzschienen befestigt werden kann. Durch die Adapterplatte können so auch solche Installationsmodule an der Sitzschiene befestigt werden, die nicht dazu eingerichtet sind, direkt mit der Sitzschiene verbunden zu werden.

Die US 2011/0233337 A1 zeigt einen Flugzeugsitz, wobei dessen Struktur über gegenüberliegende Platten mit einer Sitzschienenbefestigungseinheit, die mit der Sitzschiene verbindbar ist, verbunden werden kann. Weiter ist eine Schiene an der Seitenwand des Flugzeugs offenbart, an der der Flugzeugsitz, neben der Befestigung an den konventionellen Sitzschienen am Flugzeugboden, befestigt werden kann.

Die Aufgabe der Erfindung ist es, eine Bodenanbindungsbaugruppe anzugeben, die die Verwendung eines steifen Sitzunterbaus für einen Flugzeugsitz ermöglicht.

Die Aufgabe wird ausgehend von dem Oberbegriff des Anspruchs 1 mit dessen kennzeichnenden Merkmalen gelöst. Es wird eine Bodenanbindungsbaugruppe zur mechanischen Anbindung eines Flugzeugsitzes an eine Bodenstruktur eines Flugzeuges vorgeschlagen, welche mindestens drei Befestigungspunkte aufweist, wobei die Bodenanbindungsbaugruppe an mindestens drei Befestigungspunkten mit jeweils einem Befestigungselement an der Bodenstruktur befestigbar ist, wobei die Bodenanbindungsbaugruppe eine Adapterplatte, wobei die mechanische Verbindung zwischen der Adapterplatte und den Befestigungselementen um mindestens eine Achse im Wesentlichen momentenfrei gelagert ist, wobei mindestens eine Verbindung von der Adapterplatte zu einem Befestigungselement in mindestens einer Richtung verschiebbar ist, wobei die Bodenanbindungsbaugruppe drei Befestigungselemente aufweist, wobei ein erstes Befestigungselement und ein zweites Befestigungselement entlang einer Längsachse angeordnet sind, wobei das zweite Befestigungselement und ein drittes Befestigungselement entlang einer Querachse angeordnet sind, wobei die Längsachse und die Querachse rechtwinklig zueinander stehen, wobei das erste Befestigungselement in der Längsachse mindestens jeweils 20 mm in beide Richtungen verschiebbar ist, parallel zu der Querachse mindestens jeweils 3 mm in beide Richtungen verschiebbar ist, und parallel zu einer Hochachse fest ist, wobei das zweite Befestigungselement in der Längsachse fest ist, in der Querachse fest ist, und in der Hochachse fest ist, wobei das dritte Befestigungselement parallel zu der Längsachse fest ist, in der Querachse mindestens jeweils 20 mm in beide Richtungen verschiebbar ist, und parallel zu der Hochachse fest ist.

Die Adapterplatte und deren Lagerung zu den Befestigungselementen, die ortsfest auf den Befestigungspunkten der Bodenstruktur liegen, führt dazu, dass eine Vordeformation der Bodenstruktur des Flugzeugs im Wesentlichen keine Momente auf die Adapterplatte überträgt. Eine im Wesentlichen momentenfreie Lagerung bedeutet, dass auf die Stabilität der Adapterplatte bezogen nur geringfügige Momente eingeleitet werden. Daher ist die Adapterplatte der Bodenanbindungsbaugruppe bei einer Vordeformation der Bodenstruktur des Flugzeugs frei von Deformationen, wodurch an der Adapterplatte angebrachte Strukturen eines Flugzeugsitzes nicht von einer Vordeformation der Bodenstruktur des Flugzeugs betroffen sind. Dies kann es ermöglichen, die weiteren Strukturen steifer und/oder leichter auszuführen, was insgesamt einen leichteren Flugzeugsitz mit einem steifen Sitzunterbau ermöglicht.

Erfindungsgemäß ist mindestens eine Verbindung von der Adapterplatte zu einem Befestigungselement in mindestens einer Richtung verschiebbar. Die Verschiebbarkeit mindestens eines Befestigungselements gegenüber der Adapterplatte in mindestens einer Richtung ermöglicht die weitgehend kräftefreie Verschiebung von Befestigungspunkten in dieser Richtung, wobei in den anderen Richtungen mechanische Kräfte übertragen werden können. Die Bodenanbindungsbaugruppe kann daher insgesamt Kräfte von der Bodenstruktur des Flugzeugs in alle Richtungen über die Adapterplatte zu weiteren Strukturen eines Flugzeugsitzes übertragen, nicht jedoch in alle Richtungen Kräfte von den einzelnen Befestigungselementen aus.

Die Verschiebbarkeit zwischen der Adapterplatte und mindestens einem Befestigungselement ist vorzugsweise begrenzt. Die Begrenzung der Verschiebbarkeit definiert den Toleranzbereich, in dem eine Vordeformation der Bodenstruktur durch die Bodenanbindungsbaugruppe aufgenommen werden kann.

Die Längsachse ist vorzugsweise parallel zu der Flugrichtung eines Flugzeugs ausgerichtet, wobei die rechtwinklig hierzu liegende Querachse mit der Längsachse eine Ebene aufspannt, welche vorzugsweise in der Ebene des Kabinenbodens bzw. der Bodenstruktur oder parallel hierzu liegt. Diese Art der Lagerung eignet sich gut für eine kräftefreie Lagerung der Adapterplatte bei einer Vorverformung des Kabinenbodens. Insbesondere ist diese Art der Lagerung auch für die Verwendung auf zwei parallelen Sitzschienen an der Bodenstruktur des Flugzeugs geeignet. Weiterhin ist die beschriebene Art der Lagerung an drei Befestigungspunkten mit den Befestigungselementen zur Längsachse, welche in üblichen Ausführungsformen im Wesentlichen parallel zu der Haupterstreckungsrichtung des Flugzeugs verläuft, unsymmetrisch. Weiterhin ist die Lagerung auch in der Querachse unsymmetrisch, was sich beides nicht in den Ausführungen bekannten Bauweisen findet.

Weiterhin ist in bevorzugten Ausführungsformen das erste Befestigungselement um die Längsachse rotationsfest, um die Querachse rotationsfest und um eine Hochachse rotationsfest. Zudem ist das zweite Befestigungselement vorzugsweise um die Längsachse rotationsfest, um die Querachse rotationsfest und um die Hochachse rotationsfest. Vorteilhafterweise ist das dritte Befestigungselement um die Längsachse rotationsfest, um die Querachse momentenfrei gelagert, und um die Hochachse rotationsfest.

Mit einer derartigen Konfiguration der Freiheitsgrade kann ein Sitzunterbau eines Flugzeugsitzes bei einer Vordeformation der Bodenstruktur kräftefrei gehalten werden, so dass ein steifer Sitzunterbau verwendet werden kann. Insbesondere eignet sich eine solche Konfiguration dazu, um einen hohen Toleranzbereich in Bezug zu der Lage eines möglichen Drehpunkts zu erhalten, um den sich eine Sitzschiene bei einer Vorverformung der Bodenstruktur dreht.

Vorzugsweise weisen alle Befestigungselemente eine im Wesentlichen momentenfreie mechanische Verbindung zu der Adapterplatte auf. Dies verbessert die Entkopplung der Vordeformation der Bodenstruktur von der Adapterplatte, so dass die Adapterplatte alle mechanischen Lasten, die im regulären Betrieb und im Crashfall zwischen Flugzeugsitz und Bodenstruktur auftreten, übertragen kann, jedoch keine Verformung bei einer entsprechenden Vordeformation der Bodenstruktur erfährt.

Vorzugsweise ist die Bodenanbindungsbaugruppe derart an der Bodenstruktur befestigbar, dass mindestens eine Verbindung von der Adapterplatte zu einem Befestigungselement einen Verformungsbereich aufweist, der dafür vorgesehen ist, in mindestens einer Richtung eine Verschiebbarkeit durch eine plastische Deformation zu ermöglichen. Die plastische Verformung des Verformungsbereichs erfolgt dabei in einem Strukturteil zwischen einem Befestigungselement, das ortsfest an einem Befestigungspunkt der Bodenstruktur verbunden ist, und der Adapterplatte. Die plastische Verformbarkeit in mindestens einer Richtung erlaubt vorzugsweise die Übertragung von Kräften in die anderen Richtungen. Ein Verformungsbereich ist vorteilhaft, da dieser die notwendige Beweglichkeit in der entsprechenden Richtung zwischen Befestigungselement und Adapterplatte erst beim Auftreten entsprechender Kräfte ermöglicht und daher bei der Montage einfach zu handhaben ist. Weiterhin kann die entsprechende Beweglichkeit mit einem geringen Strukturgewicht sowie kostengünstig erreicht werden. Eine Richtung der plastischen Deformation kann auch eine Rotation umfassen.

Eine solche Verbindung kann auch als Fließgelenk bezeichnet werden, wobei das Fließen auf die vorgesehene mechanische Verformbarkeit oberhalb einer Fließgrenze des Materials im Verformungsbereich der Verbindung bezogen ist.

Der entsprechende Verformungsbereich kann weiterhin bei einem Crashfall Schocklasten durch Energieaufnahme reduzieren, was vorteilhaft für die Insassen- und Sitzstrukturbelastung sein kann.

In einer vorteilhaften Ausführungsform weist die mechanische Verbindung zwischen der Adapterplatte und mindestens einem Befestigungselement eine Kugelkopflagerung auf. Eine Kugelkopflagerung ist eine vorteilhafte Ausführungsform, um eine momentenfreie Lagerung der Bodenanbindungsbaugruppe zu erreichen.

In einer weiteren vorteilhaften Ausführungsform weist die mechanische Verbindung zwischen der Adapterplatte und mindestens einem Befestigungselement ein Elastomerlager auf. Ein Elastomerlager ermöglicht eine momentenfreie Lagerung und kann zusätzlich im Normalbetrieb die Übertragung von Vibrationen und Körperschall zwischen der Bodenstruktur und der Bodenanbindungsbaugruppe reduzieren, was den Komfort für den Passagier erhöhen kann.

Die mechanische Verbindung zwischen der Adapterplatte und mindestens einem Befestigungselement weist vorteilhafterweise einen Gleitsitz auf. Die mechanische Lagerung mit einem Gleitsitz ist eine vorteilhafte Ausführungsform, um eine Verschiebbarkeit in der Lagerung zumindest in einer Richtung zu ermöglichen. Kräfte senkrecht zur Verschiebbarkeit können durch eine Lagerung mit einem Gleitsitz übertragen werden. Weiterhin besteht die Möglichkeit der gleichzeitigen momentenfreien Lagerung in einer Drehachse.

Die Bodenanbindungsbaugruppe ist vorzugsweise derart gelagert, dass eine Auslenkung der Befestigungspunkte aus ihrer Ausgangslage um weniger als 200 mm keine wesentliche Deformation der Adapterplatte verursacht. Eine derartige Lagerung definiert die Toleranzzone und ist eine Beschränkung der möglichen Vordeformation der Bodenstruktur. Eine Beschränkung der Toleranzzone begrenzt das entsprechende Strukturgewicht, was aufgrund der Luftfahrtanwendung vorteilhaft ist.

Vorzugsweise ist die Bodenanbindungsbaugruppe an zwei auf einer Sitzschiene liegenden Befestigungspunkten befestigbar. Die Bodenanbindungsbaugruppe ist derart gelagert, dass eine Drehung der Sitzschiene um einen innerhalb der Sitzschiene und im Umkreis von 1 m um den geometrischen Mittelpunkt der Bodenanbindungsbaugruppe liegenden Drehpunkt um mindestens 10° keine irreversible Deformation der Adapterplatte hervorruft. Eine derartige Lagerung ist für die Verwendung eines steifen Sitzunterbaus gut geeignet, da weitgehend keine Vordeformationen oder Deformation während des Crashs der Bodenstruktur selbst durch den Sitzunterbau aufgenommen werden muss, was insbesondere die Verwendung von leichten Faserverbundmaterialien ermöglicht.

In einer bevorzugten Ausführungsform ist an der Adapterplatte mindestens ein Anschlusspunkt für einen Sitzunterbau vorgesehen. Der Anschlusspunkt ermöglicht eine mechanische Verbindung zum Sitzunterbau, vorzugsweise mit einer lösbaren Verbindung mit Mitteln, wie beispielsweise Schrauben, Bolzen und/oder Gewindebuchsen.

Weiterhin ist in einer vorteilhaften Ausführungsform auf der Bodenanbindungsbaugruppe ein Sitzunterbau, der an einem Anschlusspunkt an die Adapterplatte angeschlossen ist, translatorisch und/oder rotatorisch in der Bodenebene bewegbar. Die translatorische Beweglichkeit eines Sitzunterbaus auf der Bodenanbindungsbaugruppe ist für eine Nutzung eines Flugzeugsitzes vorteilhaft, um den Flugzeugsitz in der Kabine bei Bedarf beispielsweise an einen Tisch heran oder weg bewegen zu können. Eine rotatorische Beweglichkeit des Sitzunterbaus auf der Bodenanbindungsbaugruppe erlaubt eine Veränderung der Sitzausrichtung, was die Flexibilität der Nutzung des Flugzeugsitzes erhöhen kann.

In einer alternativen vorteilhaften Ausführungsform ist die Adapterplatte zusammen mit einem Sitzunterbau ein Integralbauteil. Die vorgeschlagene Ausführungsform ermöglicht eine leichte und steife Anbindung eines Sitzunterbaus an die Bodenanbindungsbaugruppe. Weiterhin wird die Teilezahl durch die Integralbauweise reduziert und eine bessere Leitung von Kräften ermöglicht.

Vorzugsweise umfasst die Bodenanbindungsbaugruppe mindestens eine Brückenkonstruktion, wobei die Brückenkonstruktion an mindestens einem Befestigungselement um mindestens eine Achse momentenfrei gelagert ist. Die Brückenkonstruktion ist vorteilhaft für eine leichte Bodenanbindungsbaugruppe und ermöglicht in vorteilhafter Weise die Verformung der Bodenstruktur mit vernachlässigbar resultierenden Kräften in der Adapterplatte. Die Adapterplatte kann für eine Ausführungsform mit drei Befestigungselementen sowie für eine mögliche Ausführungsform an vier Befestigungselementen, z.B. an zwei Sitzschienen, mit einer Brückenkonstruktion baugleich ausgeführt werden.

Die Brückenkonstruktion ist vorzugsweise momentenfrei mit der Adapterplatte verbunden. Die Toleranz der Bodenanbindungsbaugruppe gegen Deformationen der Bodenstruktur des Flugzeugs kann dadurch erhöht werden.

Die Adapterplatte ist vorzugsweise ein Faserverbundbauteil. Die Ausführungsform der Adapterplatte als Faserverbundbauteil mit beispielsweise einem Anteil von Kohlenstofffasern am Strukturgewicht ermöglicht eine hohe Steifigkeit bei geringem Gewicht, wobei aufgrund der erfindungsgemäßen Bodenanbindungsbaugruppe die Adapterplatte keinen Deformationen aus der Bodenstruktur folgen muss, was die Anwendbarkeit von Faserverbundstrukturen verbessert.

Weiterhin weist die Adapterplatte vorzugsweise eine Sandwichstruktur auf. Dies ermöglicht eine sehr leichte und vor allem biegesteife Adapterplatte.

Weiterhin wird die Aufgabe der Erfindung ausgehend vom Oberbegriff des letzten Anspruchs mit dessen kennzeichnenden Merkmalen gelöst. Es wird ein Flugzeugsitz vorgeschlagen, wobei eine Bodenanbindungsbaugruppe vorgesehen ist. Die Bodenanbindungsbaugruppe kann der Fuß eines Flugzeugsitzes sein. Ein Flugzeugsitz mit einem steifen Sitzunterbau kann vorteilhaft mittels der Bodenanbindungsbaugruppe an eine Bodenstruktur eines Flugzeugs angebunden werden. Dies kann auch für die Montage und Demontage des Flugzeugsitzes vorteilhaft sein.

Die Erfindung wird im Folgenden anhand bevorzugter Ausführungsformen unter Bezugnahme auf die beigefügten Figuren erläutert. Dabei zeigt:
- Fig. 1: eine Bodenanbindungsbaugruppe mit Brückenkonstruktion an zwei Sitzschienen;
- Fig. 2: eine Bodenanbindungsbaugruppe mit drei Befestigungselementen;
- Fig. 3: eine Bodenanbindungsbaugruppe nach einer Vordeformation der Bodenstruktur;
- Fig. 4: einen Flugzeugsitz aus dem Stand der Technik;
- Fig. 5: einen Flugzeugsitz mit Bodenanbindungsbaugruppe und steifem Sitzunterbau; und
- Fig. 6: eine Bodenanbindungsbaugruppe.

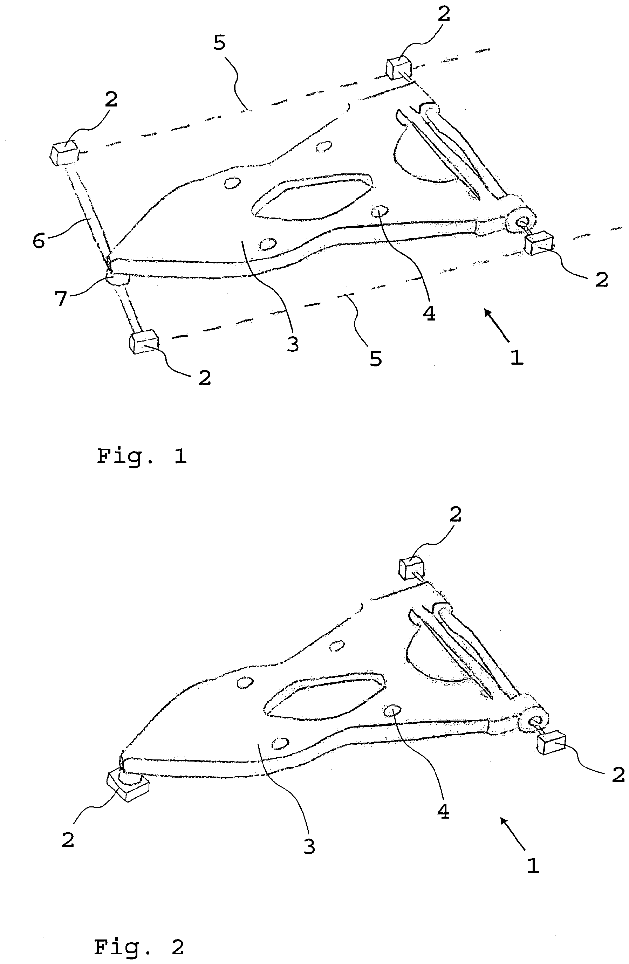

Fig. 1 zeigt ein Ausführungsbeispiel einer Bodenanbindungsbaugruppe 1 mit einer Adapterplatte 3, wobei die Adapterplatte 3 dafür eingerichtet ist, mit einem Sitzunterbau 10, in Fig. 1 nicht dargestellt, mittels beispielsweise vier Anschlusspunkten 4 verbunden zu werden. Der Sitzunterbau 10 kann ein Podest bilden, auf dem weitere Baugruppen eines Flugzeugsitzes 8 angeordnet werden können. Die Bodenanbindungsbaugruppe 1 ist mit Befestigungselementen 2 an der Bodenstruktur eines Flugzeugs befestigbar.

Die Bodenstruktur des Flugzeuges ist die mechanische Struktur im Flugzeug zur Aufnahme der mechanischen Lasten, die auf den Kabinenboden einwirken. Die Bodenstruktur weist in diesem Ausführungsbeispiel zwei Sitzschienen 5 auf, die jeweils eine Mehrzahl von möglichen Befestigungspunkten entlang ihrer Hauptachse aufweisen.

Die vier Befestigungselemente 2 der Bodenanbindungsbaugruppe 1 sind ortsfest an vier Befestigungspunkten auf den Sitzschienen 5 angeordnet, wobei jeweils zwei der Befestigungselemente 2 an einer Sitzschiene 5 angeordnet sind. Die Befestigungselemente 2 können beispielsweise an einem Befestigungspunkt mit der Sitzschiene 5 verschraubt, verspannt und/oder in anderer Weise mechanisch verbunden sein, um eine Kraftübertragung zwischen der Bodenstruktur über die Sitzschiene 5 und der Bodenanbindungsbaugruppe 1 über das Befestigungselement 2 zu ermöglichen. Die Befestigungselemente 2 stellen hierbei eine unverschiebbare Verbindung mit der Bodenstruktur dar.

Eine im Wesentlichen momentenfreie mechanische Verbindung zwischen den Befestigungselementen 2 und der Adapterplatte 3 kann in einem möglichen Ausführungsbeispiel mittels eines Kugelkopfgelenks ausgeführt sein. Das Kugelkopfgelenk überträgt translatorische Lasten, wobei das Gelenk in einem Winkelbereich eine rotatorische Freiheit ermöglicht, so dass keine Momente durch dieses Gelenk übertragen werden. Ein Teil des Kugelkopfgelenks kann ein Teil des Befestigungselements 2 sein.

In einem weiteren möglichen Ausführungsbeispiel wird die mechanische Verbindung zwischen einem oder mehreren Befestigungselementen 2 und der Adapterplatte 3 durch Elastomerlager gebildet, wodurch eine im Wesentlichen momentenfreie Lagerung an dieser Stelle realisiert wird. Elastomerlager weisen eine Verbindung von zwei gegeneinander beweglichen Teilen auf, wobei die relative Beweglichkeit durch ein zwischen beiden Teilen angeordnetes elastisches Material erzielt wird.

Weiterhin kann die mechanische Verbindung eine konstruktiv vorgesehene plastische Verformbarkeit aufweisen, wodurch mit entsprechender Krafteinwirkung in einer Richtung eine Verschiebbarkeit in dieser Richtung erreicht werden kann, wobei weiterhin eine Kraft- und/oder Momentenübertragung in andere Richtungen möglich ist. Die plastische Verformung tritt dabei vorteilhafterweise bereits ein, bevor die Kraft- und/oder Momenteneinwirkung eine Deformation bzw. Verformung der Adapterplatte 3 hervorruft.

Die mechanische Verbindung innerhalb der Bodenanbindungsbaugruppe 1 zwischen den Befestigungselementen 2 und der Adapterplatte 3 ist im Wesentlichen momentenfrei. Im Wesentlichen momentenfrei bedeutet, dass die Lagerung bzw. die mechanische Verbindung nicht dafür vorgesehen ist, mechanische Momente zu übertragen, so dass eine relative Rotation dieser mechanischen Verbindung möglich ist. Bei der relativen Rotation können jedoch geringe Momente übertragen werden, ohne dass dies der im Wesentlichen momentenfreien Lagerung entgegensteht.

In einem vorteilhaften Ausführungsbeispiel ist die mechanische Verbindung zwischen wenigstens einem Befestigungselement 2 und der Adapterplatte 3 verschiebbar. Verschiebbar bedeutet in diesem Zusammenhang, dass die mechanische Verbindung in der Achse der Verschiebbarkeit keine wesentlichen Kräfte überträgt und eine Relativbewegung zwischen Befestigungselement 2 und Adapterplatte 3 in dieser Achse möglich ist. Eine Verschiebbarkeit in einer Achse bedeutet hierbei noch keine Verschiebbarkeit in die Richtungen der anderen Achsen, so dass diese weiterhin Kräfte übertragen können.

Die Verschiebbarkeit der mechanischen Verbindung zwischen Befestigungselement 2 dient vorzugsweise nicht zu einer translatorischen Bewegung des Flugzeugsitzes 8 gegenüber der Bodenstruktur, sondern für die beschriebene weitgehend kräftefreie Relativbewegung innerhalb der Bodenanbindungsbaugruppe 1 im Fall einer Verformung der Bodenstruktur. Eine translatorische Bewegung, um beispielsweise mit dem Flugzeugsitz 8 näher an einen Tisch heranrücken zu können, kann beispielsweise durch eine Relativbewegung zwischen der Bodenanbindungsbaugruppe 1 und dem Sitzunterbau 10 und/oder durch eine Relativbewegung zwischen dem Sitzunterbau 10 und einer Sitzfläche realisiert werden.

Die Adapterplatte 3 ist ein im Wesentlichen flächiges Gebilde, das zwischen den Befestigungselementen 2 angeordnet ist. Die Adapterplatte 3 ist hierbei möglichst formstabil und steif ausgeführt, um eine Übertragung von mechanischen, insbesondere dynamischen Lasten zwischen dem Sitzunterbau 10 des Flugzeugsitzes 8 und der Bodenstruktur weitgehend ohne Verformung und Deformation zu ermöglichen. Die Adapterplatte 3 kann in einem bevorzugten Ausführungsbeispiel eine kohlenstofffaserverstärkte Struktur aufweisen. Weiterhin kann die Adapterplatte 3 auch unter Verwendung von z.B. mechanischen Schäumen und/oder Honigwabenstrukturen eine Sandwichbauweise aufweisen. Dies soll insgesamt für die Adapterplatte 3 eine sehr steife und gleichzeitig leichte Struktur ermöglichen. Die Anschlusspunkte 4 für einen Sitzunterbau 10 können metallische Einsätze sein, die eine Verschraubung und/oder Verstiftung ermöglichen und in die Adapterplatte 3 integriert sein können.

Die Adapterplatte 3 kann im Wesentlichen parallel zur Bodenebene der Flugzeugkabine ausgerichtet sein. In vorteilhaften Ausführungsformen ist die Adapterplatte 3 über der Bodenebene der Flugzeugkabine, die als Trittfläche für Passagiere dient, angeordnet. In möglichen alternativen Ausführungsformen kann die Adapterplatte 3 so angeordnet sein, dass die Bodenebene innerhalb oder an den Grenzen der Adapterplatte 3 liegt. Weiterhin alternativ kann die Adapterplatte 3 unterhalb der Bodenebene angeordnet sein.

In einem möglichen Ausführungsbeispiel können in der Adapterplatte 3 verschiedene Aussparungen und/oder Ausschnitte vorhanden sein, wodurch eine gewichtsreduzierte Adapterplatte ermöglicht wird.

In dem in Fig. 1 gezeigten Ausführungsbeispiel weist die Bodenanbindungsbaugruppe 1 an einem ersten Ende eine Brückenkonstruktion 6 auf. Die Brückenkonstruktion 6 ist zwischen zwei Befestigungselementen 2 angeordnet und mit diesen mechanisch verbunden. Die mechanische Verbindung mit einem oder beiden Befestigungselementen 2 ist in diesem Ausführungsbeispiel momentenfrei, so dass keine wesentlichen Momentlasten aus den Befestigungselementen 2 in die Brückenkonstruktion 6 eingeleitet werden können. Die Brückenkonstruktion 6 ist vorteilhafterweise eine biegesteife Konstruktion.

In möglichen Ausführungsbeispielen ist die Brückenkonstruktion 6 in einer Achse, vornehmlich die Achse ihrer längsten Ausdehnung senkrecht zu einer typischen Ausrichtung der Sitzschienen 5, verschiebbar mit einem Befestigungselement 2 und/oder der Adapterplatte 3 verbunden, so dass in diesen Bereichen keine wesentlichen Kräfte in dieser Achse übertragen werden können, was eine Vorverformung der Bodenstruktur ohne Einleitung von Kräften in die Adapterplatte 3 ermöglichen kann. Die Verschiebbarkeit kann beispielsweise durch ein Loslager realisiert werden, was vorteilhafterweise mittels eines Langlochs mit einem Gleitsitz und/oder auch durch ein Fließgelenk ausgeführt wird.

Weiterhin ist die Brückenkonstruktion 6 in diesem Ausführungsbeispiel momentenfrei mit der Adapterplatte 3 durch ein Übergangsstück 7 verbunden.

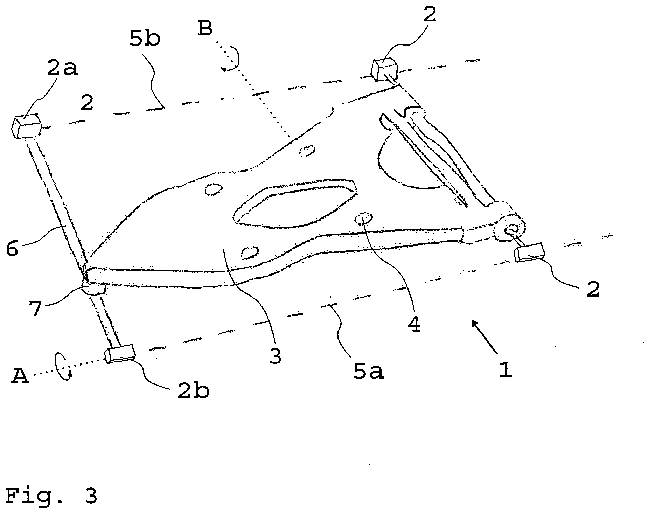

In weiteren Ausführungsbeispielen kann bei der Installation oder Montage der Bodenanbindungsbaugruppe 1 ein paralleler Versatz der Adapterplatte 3 und/oder der vier Anschlusspunkte 4 zu den Sitzschienen 5 eingestellt werden. Hierdurch kann der Flugzeugsitz 8 quer zur Flugrichtung des Flugzeugs an unterschiedlichen Positionen bei einer Befestigung von den gleichen Befestigungspunkten angeordnet werden, was die Möglichkeiten der Kabinengestaltung erweitert. Die Einstellung der Position des Flugzeugsitzes 8 mit seiner Mittel- oder auch Symmetrielinie erfolgt vorteilhafterweise zwischen den Sitzschienen 5. Diese Einstellung erfordert typischerweise einen Montagevorgang und ist getrennt von einer möglichen translatorischen Bewegung des Flugzeugsitzes 8 zu betrachten, die beispielsweise von einem Passagier vorgenommen werden kann. Die Einstellung der Position des Flugzeugsitzes quer zur Flugrichtung, beispielsweise in der Querachse B, siehe Fig. 3, kann in einem möglichen Ausführungsbeispiel durch verschiedene Einstellungen und/oder Auswahl der Länge der mechanischen Verbindung zwischen Adapterplatte 3 und Befestigungselementen 2 erfolgen.

In Fig. 2 ist eine Bodenanbindungsbaugruppe 1 gezeigt, die mit drei Befestigungselementen 2 an drei Befestigungspunkten mit einer Bodenstruktur verbunden ist. Die Befestigungspunkte können im Flugzeugboden an verschiedenen Stellen integriert sein, da die Bodenstruktur in diesem Ausführungsbeispiel keine Sitzschiene aufweist.

Fig. 3 zeigt die Bodenanbindungsbaugruppe 1 aus Fig. 1 nach einer Vordeformation der Bodenstruktur. Die Verbindung der Bodenanbindungsbaugruppe 1 erfolgt durch die Befestigungselemente 2, die fest mit den Sitzschienen 5 verbunden sind. Die in der Fig. 3 gezeigte vordere Sitzschiene 5a ist in diesem Fall um ihre Längsachse A gedreht. Die in Fig. 3 gezeigte hintere Sitzschiene 5b ist um eine Querachse B gedreht. Dies führt zu einer Rotation und zu einer Auslenkung der Befestigungselemente 2 gegenüber der Adapterplatte 3 entsprechend der Vordeformation der Bodenstruktur, die über die Rotation der Sitzschiene 5b an die Bodenanbindungsbaugruppe 1 weitergeleitet wird, sowie entsprechend der geometrischen Anordnung.

Die momentenfreie mechanische Lagerung zwischen den Befestigungselementen 2 und der Adapterplatte 3 führt dazu, dass die Bodenanbindungsbaugruppe 1 die Rotation der Schiene 5a aufnimmt, ohne dass dies zu einer Deformation oder Schädigung der Adapterplatte 3 führt. Mechanische Lasten können daher im vordeformierten Zustand weiterhin zwischen Adapterplatte und Bodenstruktur übertragen werden, um eine sichere Verbindung zu gewährleisten.

Die in der Fig. 3 dargestellte mögliche Vordeformation der Bodenstruktur in Form einer Rotation der Sitzschiene 5b führt neben einer Rotation der Befestigungselemente 2 gegenüber der Adapterplatte 3 zu einer Verschiebung der Position der Befestigungselemente 2 gegenüber der Adapterplatte 3. In diesem Ausführungsbeispiel ist die mechanische Verbindung zwischen dem Befestigungselement 2a und der Brückenkonstruktion 6 bzw. Adapterplatte 3 in Richtung B verschiebbar, wohingegen die Verbindung zwischen dem Befestigungselement 2b und der Adapterplatte 3 in diesem Ausführungsbeispiel nicht verschiebbar ist. Daher erträgt die Adapterplatte 3 die Deformationen der Bodenstruktur ohne wesentliche Verformungen der Adapterplatte 3. Die Übertragbarkeit von mechanischen Lasten bleibt jedoch erhalten. Gleiches gilt auch für das Ausführungsbeispiel ohne Brückenkonstruktion 6 und für die Seite der Bodenanbindungsbaugruppe 1 ohne Brückenkonstruktion 6.

Für einen nach der Vordeformation erwarteten Crashfall mit hohen dynamischen Lasten aus den entsprechenden Beschleunigungen durch den Crash ist die insbesondere im Bereich des Kabinenbodens steife Flugzeugsitzstruktur vorteilhaft. Ein steifer Sitzunterbau 10, der an den Anschlusspunkten 4 an die Adapterplatte 3 angeschlossen sein kann, erfährt keine Schädigung und/oder negative Beeinflussung durch die Vordeformation der Bodenstruktur. Auf diese Weise bleibt die Tragfähigkeit insbesondere für dynamische Lasten in einem Crashfall erhalten, so dass die Struktur dementsprechend präzise ausgelegt werden kann, was insbesondere zur Gewichtsreduktion genutzt werden kann. Die Lasten aus dem Crashfall können somit mit vernachlässigbaren Verformungen des Sitzunterbaus 10 bis beispielsweise zu einer Sitzfläche, Rückenlehne und/oder zu einem Gurtanschlagspunkt geleitet werden. Die Kraftbegrenzung zum Schutz des Passagiers kann oberhalb des Sitzunterbaus 10 erfolgen, beispielsweise im Übergangsbereich zu den eben genannten Sitzkomponenten, die einen direkten Kontakt zu einem Sitzenden aufweisen können. Die Kraftbegrenzung kann durch eine entsprechend hierfür in diesem Übergangsbereich vorgesehene und ausgelegte Einrichtung realisiert werden. Eine resultierende Rotationsbewegung des Sitzes kann vermieden werden.

Es kann eine funktionale Trennung im Flugzeugsitz 8 zwischen der Aufnahme von mechanischen Lasten, insbesondere im Crashfall, und der Aufnahme von Vorverformungen der Bodenstruktur erfolgen. Dadurch kann eine gezielte Auslegung der Kraftbegrenzung für einen Crashfall erfolgen.

Weiterhin dient die Bodenanbindungsbaugruppe 1 in einem bevorzugten Ausführungsbeispiel für die mechanische Anbindung nur eines Flugzeugsitzes 8 an eine Bodenstruktur. Es können jedoch auch mehr als ein Sitzplatz, beispielsweise zwei Sitzplätze, auf der Bodenanbindungsbaugruppe 1 angeordnet sein.

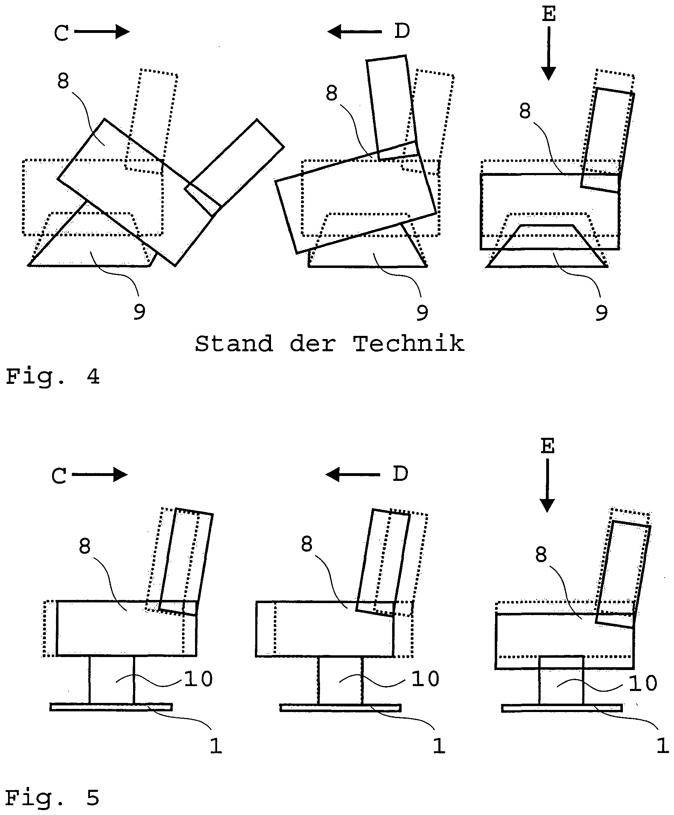

In Fig. 4 ist ein Flugzeugsitz 8 aus dem Stand der Technik mit einem Sitzgestell 9 dargestellt. Der Flugzeugsitz 8 aus dem Stand der Technik ist mit seinem Verformungsverhalten nach drei möglichen Crashfällen mit unterschiedlichen Beschleunigungsrichtungen C, D, E des Masseschwerpunkts eines sitzenden Passagiers, in Fig. 4 nicht gezeigt, dargestellt.

Das Sitzgestell 9 ist für die Aufnahme der Vordeformation entsprechend plastisch verformbar gestaltet. Dies gilt in besonderer Weise für den unteren Teil. Eine Vordeformation der Bodenstruktur des Flugzeugs ist in dieser seitlichen Darstellung nicht gezeigt. Das Sitzgestell 9 nimmt neben der Vordeformation auch die Belastungen im Crashfall mit hohen Beschleunigungen auf. Die Begrenzung der auf einen sitzenden Passagier einwirkenden Kräfte wird durch die nachgiebige Struktur des Sitzgestells 9 erreicht. Insgesamt stellt sich im unteren Bereich des Flugzeugsitzes 8 eine vergleichsweise große Deformation ein, die zu einer Drehung des Flugzeugsitzes 8 führt, wobei der Drehpunkt bezogen auf die Sitzfläche des Flugzeugsitzes 8 tief liegt, was zu großen Auslenkungen im oberen Bereich des Flugzeugsitzes 8 führt.

Die Auslenkung im Crashfall definiert die Bewegungsenveloppe des Flugzeugsitzes 8 und des sitzenden Passagiers, die von Gegenständen und/oder Objekten in der Kabine des Flugzeugs zur Vermeidung von Verletzungen freigehalten werden müssen. Nach dem Stand der Technik ergibt sich eine entsprechend große Bewegungsenveloppe. Eine steifere Ausführung des Sitzgestells 9 ist nach dem Stand der Technik durch die notwendige Aufnahme von Vorverformungen der Bodenstruktur des Flugzeugs durch das Sitzgestell 9 sowie durch die geforderte Kraftbegrenzung für den Passagier durch Aufnahme kinetischer Energie im Crashfall nicht möglich.

Alternativ besteht die Möglichkeit, den Freiraum um den Passagier so klein zu halten, dass der Weg zur Grenze des Freiraums, zum Beispiel ein Tisch oder weiterer Flugzeugsitz, in einem Crashfall so kurz ist, dass keine signifikanten Relativgeschwindigkeiten zwischen Passagier und angrenzenden Teilen vor einer Kollision auftreten können. Dies führt allerdings zu erheblichen Einbußen im Komfort während des regulären Betriebs. Weiterhin kann dennoch eine Polsterung der entsprechenden Teile notwendig werden, was beispielsweise bei einer Tischoberfläche unpraktikabel ist.

In Fig. 5 sind drei Flugzeugsitze 8 mit einem Ausführungsbeispiel einer Bodenanbindungsbaugruppe 1 dargestellt, die die gleichen Beschleunigungen aus verschiedenen Crashfällen erfahren wie die Flugzeugsitze in Fig. 4. Die Bodenanbindungsbaugruppe 1 leitet Vorverformungen der Bodenstruktur des Flugzeugs nicht an den Sitzunterbau 10 weiter. Daher muss der Sitzunterbau 10 nicht in der Lage sein, Verformungen aufzunehmen, und kann sehr steif ausgeführt werden. Weiterhin wird die Verwendung von leichten und steifen Materialien mit geringem Verformungspotential, wie beispielsweise Kohlenstofffaser verstärkten Kunststoffen, ermöglicht, was zu einem leichteren Flugzeugsitz 8 führen kann. Die steife Ausführung des Sitzunterbaus 10 bietet für den Crashfall verschiedene Vorteile, beispielsweise kann eine Drehbewegung des Flugzeugsitzes 8 im Crashfall bei Beschleunigungsrichtungen in Bodenebene C, D weitgehend unterdrückt werden und/oder die Energieaufnahme bzw. Kraftbegrenzung gezielt oberhalb des Sitzunterbaus 10 erfolgen, was eine kleine Bewegungsenveloppe und eine geringere Strukturbelastung des Flugzeugsitzes 8 im Crashfall ermöglichen kann.

Die Bodenanbindungsbaugruppe 1 kann in einem möglichen Ausführungsbeispiel mit einem Ausgleichscover abgedeckt werden, so dass sich eine ästhetisch hochwertige Fußbodengestaltung ergibt.

Eine bevorzugte Anwendung der Bodenanbindungsbaugruppe 1 eines Flugzeugsitzes 8 liegt im VIP-Bereich oder auch Sonderausstattungsbereich für Flugzeuge, insbesondere für Einzelsitze, Sessel und Polstermöbel. Weiterhin kann die Bodenanbindungsbaugruppe 1 vorteilhaft für Flugzeugsitze 8 in Kabinenabteilen eines Flugzeugs mit gehobenem Standard, sog. First Class Sitzen, eingesetzt werden.

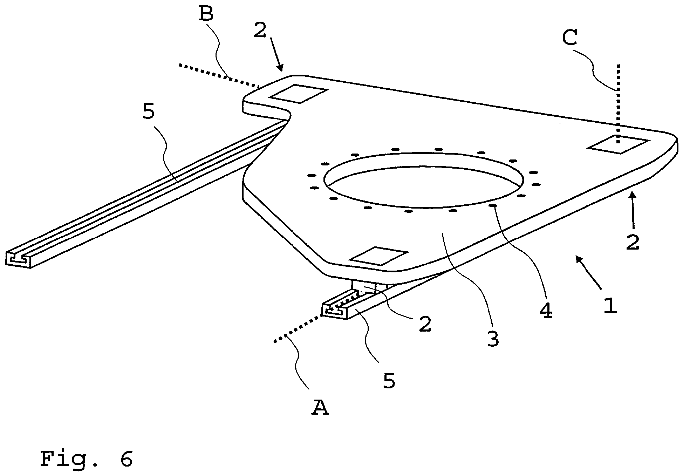

Fig. 6 zeigt ein Ausführungsbeispiel einer Bodenanbindungsbaugruppe 1, welche an drei Befestigungspunkten mit jeweils einem Befestigungselement 2 an der Bodenstruktur eines Flugzeugs befestigt ist. Die drei Befestigungspunkte befinden sich auf zwei parallelen Sitzschienen 5. Ein erstes Befestigungselement 2 ist in der Längsachse A angeordnet und ist vorzugsweise parallel zu der Längsachse A verschiebbar ausgeführt. Die Verschiebbarkeit kann insbesondere bei dem ersten Befestigungselement 2 und parallel zu der Längsachse A durch eine bewegliche bzw. verschiebbare mechanische Verbindung zwischen dem ersten Befestigungselement 2 und der Adapterplatte 3 oder durch eine Verschiebbarkeit des ersten Befestigungselements 2 in der Sitzschiene 5 erreicht werden. Das erste Befestigungselement 2 ist in der Fig. 6 das einzig sichtbare Befestigungselement. Das zweite und das dritte Befestigungselement 2 werden durch Teile der Adapterplatte verdeckt und sind nur entsprechende ihrer Position angedeutet.

Das erste Befestigungselement 2 ist vorzugsweise in Sitzrichtung vorn an der Bodenanbindungsbaugruppe 1 angeordnet, und weist weiterhin in der Querachse B vorzugsweise kein korrespondierendes Befestigungselement 2 an der anderen Sitzschiene 5 auf. Die Bodenanbindungsbaugruppe 1 weist somit eine unsymmetrische Konfiguration auf. Parallel zu der Querachse B weist das erste Befestigungselement 2 vorzugsweise eine verschiebbare Verbindung zu der Adapterplatte 3 auf. Weiterhin ist vorzugsweise keine Verschiebbarkeit in Richtung einer Hochachse C vorgesehen, welche vorzugsweise senkrecht zu der Längsachse A und der Querachse B steht. In bevorzugten Ausführungsformen weist das erste Befestigungselement 2 keine rotatorischen Freiheitsgrade auf.

Ein zweites Befestigungselement 2 der Adapterplatte 3 ist in diesem vorteilhaften Ausführungsbeispiel auf derselben Sitzschiene 5 befestigt. Es liegt folglich in der gleichen Längsachse A wie das erste Befestigungselement 2. Gegenüber dem zweiten Befestigungselement 2 ist das dritte Befestigungselement 2 auf der anderen Sitzschiene 5 befestigt. Das zweite Befestigungselement 2 weist in vorteilhaften Ausführungsbeispielen keine rotatorischen und keine translatorischen Freiheitsgrade gegenüber der Sitzschiene 5 und gegenüber der Adapterplatte 3 auf.

Das dritte Befestigungselement 2 ist als einziges Befestigungselement 2 auf der in Fig. 6 oben dargestellten Sitzschiene 5 vorgesehen. Das dritte Befestigungselement 2 weist vorzugsweise keine translatorische und keine rotatorische Beweglichkeit in der Längsachse A und in der Hochachse C auf. Vorteilhaft ist eine Verschiebbarkeit des dritten Befestigungselements 2 gegenüber der Adapterplatte 3 um mindestens 20 mm aus einer Normallage in der Querachse B. Zudem ist das dritte Befestigungselement 2 vorzugsweise momentenfrei um die Querachse B an der Adapterplatte 3 gelagert. Insgesamt ist auch eine gespiegelte Ausführung der Befestigungselemente 2 mit definierten Freiheitsgraden möglich, jedoch ist es vorteilhaft, wenn das erste und zweite Befestigungselement 2 immer auf einer Sitzschiene 5 angeordnet sind und das dritte Befestigungselement 2 im kürzesten Abstand zu dem zweiten Befestigungselement 2 auf der weiteren Sitzschiene 5 angeordnet ist.

Eine Drehung einer Sitzschiene 5 um die Längsachse A oder um eine in der Nähe befindliche Drehachse kann bei einer Vorverformung vorzugsweise durch eine translatorische Ausgleichsbewegung der Verbindung zwischen Befestigungselementen 2 und der Adapterplatte 3 ausgeglichen werden.

## Patentansprüche

1. Bodenanbindungsbaugruppe (1) zur mechanischen Anbindung eines Flugzeugsitzes (8) an eine Bodenstruktur eines Flugzeuges, welche mindestens drei Befestigungspunkte aufweist, wobei
- die Bodenanbindungsbaugruppe (1) an mindestens drei Befestigungspunkten mit jeweils einem Befestigungselement (2) an der Bodenstruktur befestigbar ist, wobei
- die Bodenanbindungsbaugruppe (1) eine Adapterplatte (3) umfasst, wobei
- die mechanische Verbindung zwischen der Adapterplatte (3) und den Befestigungselementen (2) um mindestens eine Achse im Wesentlichen momentenfrei gelagert ist, wobei
- mindestens eine Verbindung von der Adapterplatte (3) zu einem Befestigungselement (2) in mindestens einer Richtung verschiebbar ist, wobei
- die Bodenanbindungsbaugruppe (1) drei Befestigungselemente (2) aufweist, wobei
- ein erstes Befestigungselement (2) und ein zweites Befestigungselement (2) entlang einer Längsachse (A) angeordnet sind, wobei
- das zweite Befestigungselement (2) und ein drittes Befestigungselement (2) entlang einer Querachse (B) angeordnet sind, wobei
- die Längsachse (A) und die Querachse (B) rechtwinklig zueinander stehen, **dadurch gekennzeichnet, dass**
- das erste Befestigungselement (2) in der Längsachse (A) mindestens jeweils 20 mm in beide Richtungen verschiebbar ist, parallel zu der Querachse (B) mindestens jeweils 3 mm in beide Richtungen verschiebbar ist, und parallel zu einer Hochachse (C) fest ist, wobei
- das zweite Befestigungselement (2) in der Längsachse (A) fest ist, in der Querachse (B) fest ist, und in der Hochachse (C) fest ist, wobei
- das dritte Befestigungselement (2) parallel zu der Längsachse (A) fest ist, in der Querachse (B) mindestens jeweils 20 mm in beide Richtungen verschiebbar ist, und parallel zu der Hochachse (C) fest ist.

2. Bodenanbindungsbaugruppe (1) nach Anspruch 1, **dadurch gekennzeichnet, dass** die Verschiebbarkeit zwischen der Adapterplatte (3) und mindestens einem Befestigungselement (2) begrenzt ist.

3. Bodenanbindungsbaugruppe (1) nach einem der vorangehenden Ansprüche, **dadurch gekennzeichnet, dass**
- das erste Befestigungselement (2) um die Längsachse (A) rotationsfest ist, um die Querachse (B) rotationsfest ist, und um eine Hochachse (C) rotationsfest ist,
- das zweite Befestigungselement (2) um die Längsachse (A) rotationsfest ist, um die Querachse (B) rotationsfest ist, und um die Hochachse (C) rotationsfest ist, und
- das dritte Befestigungselement (2) um die Längsachse (A) rotationsfest ist, um die Querachse (B) momentenfrei gelagert ist, und um die Hochachse (C) rotationsfest ist.

4. Bodenanbindungsbaugruppe (1) nach einem der Ansprüche 1 bis 2, **dadurch gekennzeichnet, dass** alle Befestigungselemente (2) eine im Wesentlichen momentenfreie mechanische Verbindung zu der Adapterplatte (3) aufweisen.

5. Bodenanbindungsbaugruppe (1) nach einem der vorangehenden Ansprüche, **dadurch gekennzeichnet, dass** die Bodenanbindungsbaugruppe (1) derart an der Bodenstruktur befestigbar ist, dass mindestens eine Verbindung von der Adapterplatte (3) zu einem Befestigungselement (2) einen Verformungsbereich aufweist, der dafür vorgesehen ist, in mindestens einer Richtung eine Verschiebbarkeit durch eine plastische Deformation zu ermöglichen.

6. Bodenanbindungsbaugruppe (1) nach einem der vorangehenden Ansprüche, **dadurch gekennzeichnet, dass** die mechanische Verbindung zwischen der Adapterplatte (3) und mindestens einem Befestigungselement (2) eine Kugelkopflagerung aufweist und/oder dass die mechanische Verbindung zwischen der Adapterplatte (3) und mindestens einem Befestigungselement (2) ein Elastomerlager aufweist und/oder dass die mechanische Verbindung zwischen der Adapterplatte (3) und mindestens einem Befestigungselement (2) einen Gleitsitz aufweist.

7. Bodenanbindungsbaugruppe (1) nach einem der vorangehenden Ansprüche, **dadurch gekennzeichnet, dass** die Bodenanbindungsbaugruppe (1) derart gelagert ist, dass eine Auslenkung der Befestigungspunkte aus ihrer Ausgangslage um weniger als 200 mm keine wesentliche Deformation der Adapterplatte (3) verursacht.

8. Bodenanbindungsbaugruppe (1) nach einem der vorangehenden Ansprüche, **dadurch gekennzeichnet, dass**
- die Bodenanbindungsbaugruppe (1) an zwei auf einer Sitzschiene (5) liegenden Befestigungspunkten befestigbar ist, und dass
- die Bodenanbindungsbaugruppe (1) derart gelagert ist, dass
- eine Drehung der Sitzschiene (5) um einen innerhalb der Sitzschiene (5) und im Umkreis von 1 m um den geometrischen Mittelpunkt der Bodenanbindungsbaugruppe (1) liegenden Drehpunkt um mindestens 10° keine irreversible Deformation der Adapterplatte (3) hervorruft.

9. Bodenanbindungsbaugruppe (1) nach einem der vorangehenden Ansprüche, **dadurch gekennzeichnet, dass** an der Adapterplatte (3) mindestens ein Anschlusspunkt (4) für einen Sitzunterbau (10) vorgesehen ist.

10. Bodenanbindungsbaugruppe (1) nach einem der vorangehenden Ansprüche, **dadurch gekennzeichnet, dass** auf der Bodenanbindungsbaugruppe (1) ein Sitzunterbau (10), der an einem Anschlusspunkt (4) an die Adapterplatte (3) angeschlossen ist, translatorisch und/oder rotatorisch in der Bodenebene bewegbar ist.

11. Bodenanbindungsbaugruppe (1) nach einem der Ansprüche 1 bis 8 **dadurch gekennzeichnet, dass** die Adapterplatte (3) zusammen mit einem Sitzunterbau (10) ein Integralbauteil ist.

12. Bodenanbindungsbaugruppe (1) nach einem der vorangehenden Ansprüche, **dadurch gekennzeichnet, dass**
- die Bodenanbindungsbaugruppe (1) mindestens eine Brückenkonstruktion (6) umfasst, wobei
- die Brückenkonstruktion (6) an mindestens einem Befestigungselement (2) um mindestens eine Achse momentenfrei gelagert ist.

13. Bodenanbindungsbaugruppe (1) nach Anspruch 12, **dadurch gekennzeichnet, dass** die Brückenkonstruktion (6) momentenfrei mit der Adapterplatte (3) verbunden ist.

14. Bodenanbindungsbaugruppe (1) nach einem der vorangehenden Ansprüche, **dadurch gekennzeichnet, dass** die Adapterplatte (3) ein Faserverbundbauteil ist und/oder dass die Adapterplatte (3) eine Sandwichstruktur aufweist.

15. Flugzeugsitz (8), **dadurch gekennzeichnet, dass** eine Bodenanbindungsbaugruppe (1) nach einem der vorangehenden Ansprüche vorgesehen ist.

## Claims

1. Floor connection assembly (1) for mechanically connecting an aircraft seat (8) to a floor structure of an aircraft, which has at least three fastening points, wherein
- the floor connection assembly (1) can be fastened to the floor structure at at least three fastening points by one fastening element (2) each, wherein
- the floor connection assembly (1) comprises an adapter plate (3), wherein
- the mechanical connection between the adapter plate (3) and the fastening elements (2) is mounted substantially torque-free about at least one axis, wherein
- at least one connection of the adapter plate (3) to a fastening element (2) is displaceable in at least one direction, wherein
- the floor connection assembly (1) comprises three fastening elements (2), wherein
- a first fastening element (2) and a second fastening element (2) are arranged along a longitudinal axis (A), wherein
- the second fastening element (2) and a third fastening element (2) are arranged along a transverse axis (B), wherein
- the longitudinal axis (A) and the transverse axis (B) are mutually perpendicular, **characterised in that**
- the first fastening element (2) is displaceable along the longitudinal axis (A) in both directions, at least 20 mm in each case, is displaceable parallel to the transverse axis (B) in both directions, at least 3 mm in each case, and is fixed parallel to a vertical axis (C), wherein
- the second fastening element (2) is fixed along the longitudinal axis (A), is fixed along the transverse axis (B), and is fixed along the vertical axis (C), wherein
- the third fastening element (2) is fixed parallel to the longitudinal axis (A), is displaceable along the transverse axis (B) in both directions, at least 20 mm in each case, and is fixed parallel to the vertical axis (C).

2. Floor connection assembly (1) according to claim 1, **characterised in that** the displaceability between the adapter plate (3) and at least one fastening element (2) is limited.

3. Floor connection assembly (1) according to any of the preceding claims, **characterised in that**
- the first fastening element (2) is fixed in rotation about the longitudinal axis (A), is fixed in rotation about the transverse axis (B), and is fixed in rotation about a vertical axis (C),
- the second fastening element (2) is fixed in rotation about the longitudinal axis (A), is fixed in rotation about the transverse axis (B), and is fixed in rotation about the vertical axis (C), and
- the third fastening element (2) is fixed in rotation about the longitudinal axis (A), is mounted torque-free about the transverse axis (B), and is fixed in rotation about the vertical axis (C).

4. Floor connection assembly (1) according to any of claims 1 to 2, **characterised in that** all of the fastening elements (2) have a substantially torque-free mechanical connection to the adapter plate (3).

5. Floor connection assembly (1) according to any of the preceding claims, **characterised in that** the floor connection assembly (1) can be fastened to the floor structure in such a way that at least one connection of the adapter plate (3) to a fastening element (2) has a deformation region which is provided so as to make displacement possible in at least one direction by plastic deformation.

6. Floor connection assembly (1) according to any of the preceding claims, **characterised in that** the mechanical connection between the adapter plate (3) and at least one fastening element (2) comprises a ball head bearing and/or **in that** the mechanical connection between the adapter plate (3) and at least one fastening element (2) comprises an elastomer bearing and/or **in that** the mechanical connection between the adapter plate (3) and at least one fastening element (2) comprises a sliding fit.

7. Floor connection assembly (1) according to any of the preceding claims, **characterised in that** the floor connection assembly (1) is mounted in such a way that deflection of the fastening points from the initial position thereof by less than 200 mm does not cause significant deformation of the adapter plate (3).

8. Floor connection assembly (1) according to any of the preceding claims, **characterised in that**
- the floor connection assembly (1) can be fastened at two fastening points which are positioned on a seat rail (5), and **in that**
- the floor connection assembly (1) is mounted in such a way that
- rotation of the seat rail (5) through at least 10° about a centre of rotation, which is positioned within the seat rail (5) and within a 1 m radius of the geometric centre of the floor connection assembly (1), does not bring about irreversible deformation of the adapter plate (3).

9. Floor connection assembly (1) according to any of the preceding claims, **characterised in that** at least one attachment point (4) for a seat foundation (10) is provided on the adapter plate (3).

10. Floor connection assembly (1) according to any of the preceding claims, **characterised in that** a seat foundation (10), which is connected to the adapter plate (3) at an attachment point (4), can be moved in translation and/or in rotation in the floor plane on the floor connection assembly (1).

11. Floor connection assembly (1) according to any of claims 1 to 8, **characterised in that** the adapter plate (3) is an integral part together with a seat foundation (10).

12. Floor connection assembly (1) according to any of the preceding claims, **characterised in that**
- the floor connection assembly (1) comprises at least one bridge construction (6), wherein
- the bridge construction (6) is mounted torque-free about at least one axis at at least one fastening element (2).

13. Floor connection assembly (1) according to claim 12, **characterised in that** the bridge construction (6) is connected to the adapter plate (3) in a torque-free manner.

14. Floor connection assembly (1) according to any of the preceding claims, **characterised in that** the adapter plate (3) is a fibre composite component and/or **in that** the adapter plate (3) has a sandwich structure.

15. Aircraft seat (8), **characterised in that** a floor connection assembly (1) according to any of the preceding claims is provided.

## Revendications

1. Ensemble d'amarrage au plancher (1) pour amarrer mécaniquement un siège d'avion (8) au niveau d'une structure de plancher d'un avion, qui présente au moins trois points de fixation, dans lequel
- l'ensemble d'amarrage au plancher (1) peut être fixé au niveau d'au moins trois points de fixation respectivement à un élément de fixation (2) au niveau de la structure de plancher, dans lequel
- l'ensemble d'amarrage au plancher (1) comprend une plaque d'adaptation (3), dans lequel
- la liaison mécanique entre la plaque d'adaptation (3) et les éléments de fixation (2) est montée sensiblement sans couple autour d'au moins un axe, dans lequel
- au moins une liaison est mobile dans au moins une direction de la plaque d'adaptation (3) à un élément de fixation (2), dans lequel
- l'ensemble d'amarrage au plancher (1) présente trois éléments de fixation (2), dans lequel
- un premier élément de fixation (2) et un deuxième élément de fixation (2) sont disposés le long d'un axe longitudinal (A), dans lequel
- le deuxième élément de fixation (2) et un troisième élément de fixation (2) sont disposés le long d'un axe transversal (B), dans lequel
- l'axe longitudinal (A) et l'axe transversal (B) sont placés à angle droit l'un par rapport à l'autre, **caractérisé en ce que**
- le premier élément de fixation (2) est mobile selon l'axe longitudinal (A) au moins respectivement de 20 mm dans les deux directions, est mobile parallèlement à l'axe transversal (B) au moins respectivement de 3 mm dans les deux directions, et est fixe parallèlement à un axe vertical (C), dans lequel
- le deuxième élément de fixation (2) est fixe dans l'axe longitudinal (A), est fixe dans l'axe transversal (B), et est fixe dans l'axe vertical (C), dans lequel
- le troisième élément de fixation (2) est fixe parallèlement à l'axe longitudinal (A), est mobile dans l'axe transversal (B) au moins respectivement de 20 mm dans les deux directions, et est fixe parallèlement à l'axe vertical (C).

2. Ensemble d'amarrage au plancher (1) selon la revendication 1, **caractérisé en ce que** la mobilité entre la plaque d'adaptation (3) et au moins un élément de fixation (2) est limitée.

3. Ensemble d'amarrage au plancher (1) selon une des revendications précédentes, **caractérisé en ce que**
- le premier élément de fixation (2) est fixe en rotation autour de l'axe longitudinal (A), est fixe en rotation autour de l'axe transversal (B), et est fixe en rotation autour d'un axe vertical (C),
- le deuxième élément de fixation (2) est fixe en rotation autour de l'axe longitudinal (A), est fixe en rotation autour de l'axe transversal (B), et est fixe en rotation autour de l'axe vertical (C), et
- le troisième élément de fixation (2) est fixe en rotation autour de l'axe longitudinal (A), est monté sans couple autour de l'axe transversal (B), et est fixe en rotation autour de l'axe vertical (C).

4. Ensemble d'amarrage au plancher (1) selon une des revendications 1 à 2, **caractérisé en ce que** tous les éléments de fixation (2) présentent une liaison mécanique sensiblement sans couple par rapport à la plaque d'adaptation (3).

5. Ensemble d'amarrage au plancher (1) selon une des revendications précédentes, **caractérisé en ce que** l'ensemble d'amarrage au plancher (1) peut être fixé au niveau de la structure de plancher de telle sorte qu'au moins une liaison de la plaque d'adaptation (3) à un élément de fixation (2) présente une zone de déformation qui est prévue pour permettre une mobilité dans au moins une direction par le biais d'une déformation plastique.

6. Ensemble d'amarrage au plancher (1) selon une des revendications précédentes, **caractérisé en ce que** la liaison mécanique entre la plaque d'adaptation (3) et au moins un élément de fixation (2) présente un montage à tête sphérique et/ou **en ce que** la liaison mécanique entre la plaque d'adaptation (3) et au moins un élément de fixation (2) présente une couche d'élastomère et/ou **en ce que** la liaison mécanique entre la plaque d'adaptation (3) et au moins un élément de fixation (2) présente un siège coulissant.

7. Ensemble d'amarrage au plancher (1) selon une des revendications précédentes, **caractérisé en ce que** l'ensemble d'amarrage au plancher (1) est monté de telle sorte qu'une déviation des points de fixation de moins de 200 mm par rapport à leur position de départ ne provoque pas de déformation sensible de la plaque d'adaptation (3).

8. Ensemble d'amarrage au plancher (1) selon une des revendications précédentes, **caractérisé en ce que**
- l'ensemble d'amarrage au plancher (1) peut être fixé au niveau de deux points de fixation situés sur un rail de siège (5),
et **en ce que**
- l'ensemble d'amarrage au plancher (1) est monté de telle sorte qu'une rotation du rail de siège (5) d'au moins 10° autour d'un point de rotation situé à l'intérieur du rail de siège (5) et dans la circonférence de 1 m autour du point central géométrique de l'ensemble d'amarrage au plancher (1) ne provoque pas de déformation irréversible de la plaque d'adaptation (3).

9. Ensemble d'amarrage au plancher (1) selon une des revendications précédentes, **caractérisé en ce que**, au niveau de la plaque d'adaptation (3), au moins un point de raccordement (4) est prévu pour un bâti de siège (10).

10. Ensemble d'amarrage au plancher (1) selon une des revendications précédentes, **caractérisé en ce que**, sur l'ensemble d'amarrage au plancher (1), un bâti de siège (10), qui est raccordé à la plaque d'adaptation (3) au niveau d'un point de raccordement (4), est mobile en translation et/ou en rotation dans le plan du plancher.

11. Ensemble d'amarrage au plancher (1) selon une des revendications 1 à 8, **caractérisé en ce que** la plaque d'adaptation (3) forme une pièce d'un seul tenant conjointement avec un bâti de siège (10).

12. Ensemble d'amarrage au plancher (1) selon une des revendications précédentes, **caractérisé en ce que**
- l'ensemble d'amarrage au plancher (1) comprend au moins une construction en pont (6), dans lequel
- la construction en pont (6) est montée sans couple au niveau d'au moins un élément de fixation (2) autour d'au moins un axe.

13. Ensemble d'amarrage au plancher (1) selon la revendication 12, **caractérisé en ce que** la construction en pont (6) est reliée sans couple à la plaque d'adaptation (3).

14. Ensemble d'amarrage au plancher (1) selon une des revendications précédentes, **caractérisé en ce que** la plaque d'adaptation (3) est une pièce composite en fibre et/ou **en ce que** la plaque d'adaptation (3) présente une structure sandwich.

15. Siège d'avion (8), **caractérisé en ce qu'**un ensemble d'amarrage au plancher (1) selon une des revendications précédentes est prévu.
